# EUROPEAN PATENT APPLICATION

(11) **EP 4 674 795 A1**
(43) Date of publication of application: **07.01.2026**
(21) Application number: 24811390.4
(22) Date of filing: 21.05.2024
(51) Int. Cl.: B65H 29/32, H01M 10/04

(54) **OBJECT LOADING SYSTEM**

(30) Priority: 24.05.2023 KR 20230067233; 16.05.2024 KR 20240063938
(71) Applicant: LG Energy Solution, Ltd., Seoul 07335 (KR)
(72) Inventor: KIM, Jung Won, Daejeon 34122 (KR); KEUM, Dong Yeon, Daejeon 34122 (KR); BAEK, Ju Hwan, Daejeon 34122 (KR); SO, Hee Young, Daejeon 34122 (KR); KIM, Hyun Jung, Daejeon 34122 (KR); JEONG, Do Hwan, Daejeon 34122 (KR)
(74) Representative: Goddar, Heinz J.
(86) International application number: PCT/KR2024/006871
(87) International publication number: WO 2024/242451

(57) **Abstract**

An object loading system of the present invention includes a first stator having a circulation traveling path that sequentially passes through a first section, an acceleration section, and a second section, one or more first loading parts repeatedly circulated through the first section, the acceleration section, and the second section and configured to hold an object disposed in the first section to load the object in the second section, and a controller configured to control the first loading part to be repeatedly circulated through the first section, the acceleration section, and the second section, wherein the controller is configured to control the first loading part to pass through the acceleration section at a faster speed than each of the first section and the second section.

## Description

### TECHNICAL FIELD

### CROSS-REFERENCE TO RELATED APPLICATION

The present application claims the benefit of the priority of Korean Patent Application Nos. 10-2023-0067233, filed on May 24, 2023, 10-2024-0063938, filed on May 16, 2024, which are hereby incorporated by reference in their entirety.

### TECHNICAL FIELD

The present invention relates to an object loading system in which an object (load) is loaded using a linear motor system (LMS). Particularly, the present invention relates to an object loading system capable of improving a supply speed by controlling an individual position and speed of the object.

### BACKGROUND ART

In general, secondary batteries refer to chargeable and dischargeable batteries, unlike primary batteries that are impossible to be charged. The secondary batteries are being widely used in advanced electronic devices such as phones, laptop computers, and camcorders.

In addition, the secondary batteries may be classified in various manners depending on a structure of an electrode assembly. For example, secondary batteries may be classified into a stacked type structure, a wound type (jelly roll-type) structure, and a stacking/folding type structure.

The above-described secondary battery includes an electrode assembly, an electrolyte, and a case that accommodates the electrode assembly and the electrolyte. The electrode assembly includes one or more radical units, and each of the radical units has a structure in which a positive electrode and a negative electrode are alternately arranged with a separator therebetween.

A method for manufacturing a secondary battery having such a structure includes a process of manufacturing a radical unit, a process of transferring and loading the radical unit, a process of alternately disposing the radical unit and a separator to manufacture an electrode assembly, and a process of accommodating the electrode assembly to manufacture a secondary battery.

Here, in the process of stacking the radical unit, a conveyor that transfers the radical unit and a loading box in which the radical unit falling from the conveyor is loaded are used.

However, since the conveyor is used in the method for manufacturing the secondary battery according to the related art, the configuration of the facility is complicated, and there is a limitation in that an individual position and speed of the object are not controlled.

### DISCLOSURE OF THE INVENTION

### TECHNICAL PROBLEM

An object of the present invention is to provide an object loading system capable of controlling an individual position and speed of an object by applying a linear motor system (LMS), thereby improving a supply speed of the object.

### TECHNICAL SOLUTION

An object loading system of the present invention includes a first stator having a circulation traveling path that sequentially passes through a first section, an acceleration section, and a second section, one or more first loading parts repeatedly circulated through the first section, the acceleration section, and the second section and configured to hold an object disposed in the first section to load the object in the second section, and a controller configured to control the first loading part to be repeatedly circulated through the first section, the acceleration section, and the second section, wherein the controller is configured to control the first loading part to pass through the acceleration section at a faster speed than each of the first section and the second section.

The first stator may be provided with a plurality of first coils, each of which is provided as an electromagnet, and which are disposed in a circulation traveling path that sequentially passes the first section, the acceleration section, and the second section, the first loading part may be repeatedly circulated through the first section, the acceleration section, and the second section by the interaction with the magnetic fields generated in the first stator, and the controller may be configured to control power supplied to the plurality of first coils so that the first loading part passes through the acceleration section at a faster speed than each of the first section and the second section.

The controller may be configured to increase in power supplied to the first coil disposed in the acceleration section more than power supplied to the first coil disposed in the first section and the second section so that the first loading part passes through the acceleration section at a faster speed than each of the first section and the second section.

The controller may be configured to increase in power supplied to the first coil disposed in the first section more than power supplied to the first coil disposed in the second section so that the first loading part passes through the first section at a faster speed than the second section.

The controller may be configured to control the power supplied to each of the plurality of first coils so that the first loading part passes through the acceleration section at a speed of 1,501 mm/s to 3,500 mm/s.

The controller may be configured to control the power supplied to each of the plurality of first coils so that the first loading part passes through the acceleration section at a speed of 2000mm/s to 2500mm/s.
the controller may be configured to control the power supplied to each of the plurality of first coils so that the first loading part passes through the first section at a speed of 1,000 mm/s to 1,500 mm/s.

The first stator may further include a return section connecting the second section to the first section so that the first load part, which passes through the second section, returns to the first section, and the controller may be configured to control the first loading part to pass through the return section at a faster speed than each of the first section and the second section.

The controller may be configured to control power supplied to the first coil disposed in the second section so that the first loading part is disposed at a preset position in the second section.

The first loading part may include: a first mover installed in the first stator and repeatedly circulated through the first section, the acceleration section, and the second section by the interaction with the magnetic fields generated in the first stator; and a first shuttle fixed to the first mover and configured to adsorb the object disposed in the first section so that the object falls in the second section.

The first shuttle may be detachably coupled to the first mover.

The object loading system may further include: a second stator having a circulation traveling path that sequentially passes through a supply section, in which the object is supplied, and a first-1 section facing the first section; and one or more second loading parts repeatedly circulated through the supply section and the first-1 section and configured to hold the object disposed in the supply section so that the object is disposed in the first-1 section, wherein the first loading parts may be configured to hole the object, which is disposed in the first-1 section, in the first section.

The second stator may be provided with a plurality of second coils, each of which is provided as an electromagnet, and which are disposed in a circulation traveling path that sequentially passes the supply section and the first-1 section, the second loading part may be repeatedly circulated through the supply section and the first-1 section by an interaction with magnetic fields generated in the second stator, and the controller may be configured to control power supplied to the plurality of second coils so that the second loading part is repeatedly circulated through the supply section and the first-1 section.

The controller may be configured to control the power supplied to each of the plurality of second coils so that the second loading part passes through the supply section at a slower speed than the first-1 section.

The controller may be configured to control the power supplied to each of the plurality of second coils so that the second loading part passes through the supply section at a speed of 500 mm/s to 900 mm/s.

### ADVANTAGEOUS EFFECTS

In the object loading system of the present invention, the linear motor system (LMS) may be applied to the lading device that loads the object to control the individual position and speed of the object, thereby improving the supply speed of the loaded object. That is, the present invention may precisely control the positional accuracy of the object to 0.05 mm to 0.1 mm, and as a result, the loading quality may be greatly improved.

In addition, the object loading system of the present invention may individually adsorb the objects to minimize the vacuum loss and minimize the distortion of the object to improve the process capacity.

In addition, in the object loading system of the present invention, the linear motor system (LMS) may be applied to the transfer device that transfers the object to individually control the position and speed of the supplied object, thereby improving the supply speed of the transferred object.

### BRIEF DESCRIPTION OF THE DRAWINGS

FIG. 1 is a schematic process view illustrating an object loading system of the present invention.
FIG. 2a is a design view illustrating the object loading system of the present invention.
FIG. 2b is a design view illustrating a loading device provided in the object loading system of the present invention.
FIG. 2c is a design view illustrating a transfer device provided in the object loading system of the present invention.
FIG. 3 is a view illustrating a first stator and a first mover of the object loading system of the present invention.
FIG. 4 is an enlarged view of first and second loading parts illustrated in FIG. 2a.
FIG. 5 is a schematic view illustrating an interaction between the first stator and the first mover of the object loading system of the present invention.

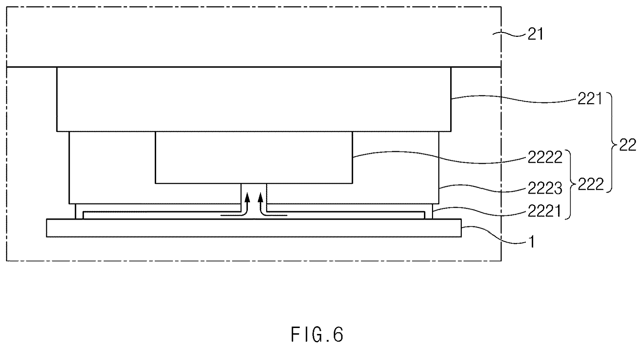

FIG. 6 is a cross-sectional view of a first shuttle.
FIG. 7 is a view illustrating a second stator and a second mover of the object loading system of the present invention.
FIG. 8 is a cross-sectional view of a second shuttle.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Object loading system of the present invention]

An object loading system of the present invention has a structure applied by a linear motor system (LMS). Thus, an object 1 may be adsorbed to minimize a vacuum loss, and a transfer and speed of the object 1 may be controlled to improve a supply speed of the object 1. Particularly, the object loading system of the present invention may minimize the vacuum loss and distortion of the object and may precisely control positional accuracy of the object up to 0.05 mm to 0.1 mm. As a result, process capability and loading quality may be significantly improved.

That is, in the object loading system of the present invention, in an adsorption section, in which the object is adsorbed, or a loading section, in which the object is loaded, the object may move at a low speed or be temporarily stopped to improve the adsorption force and the loading force, and in a traveling section for the object, the object may move at a high speed to increase in supply speed.

Hereinafter, the object loading system of the present invention will be described in detail with reference to the attached drawings.

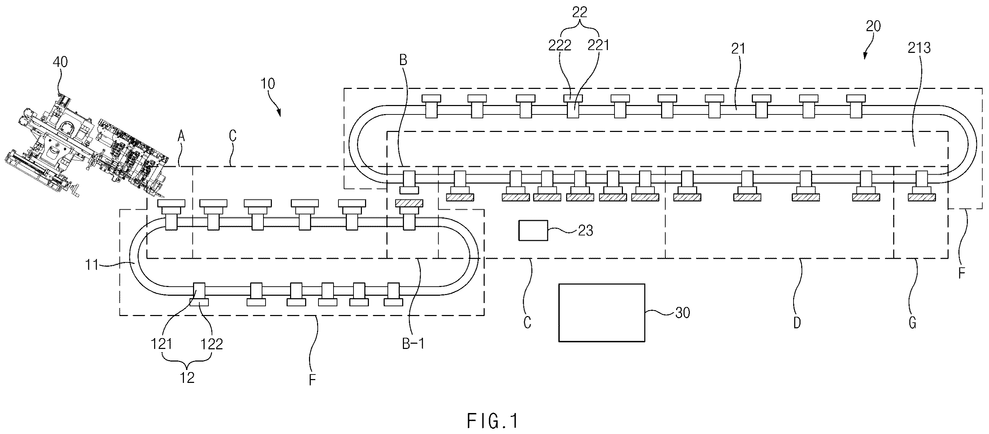

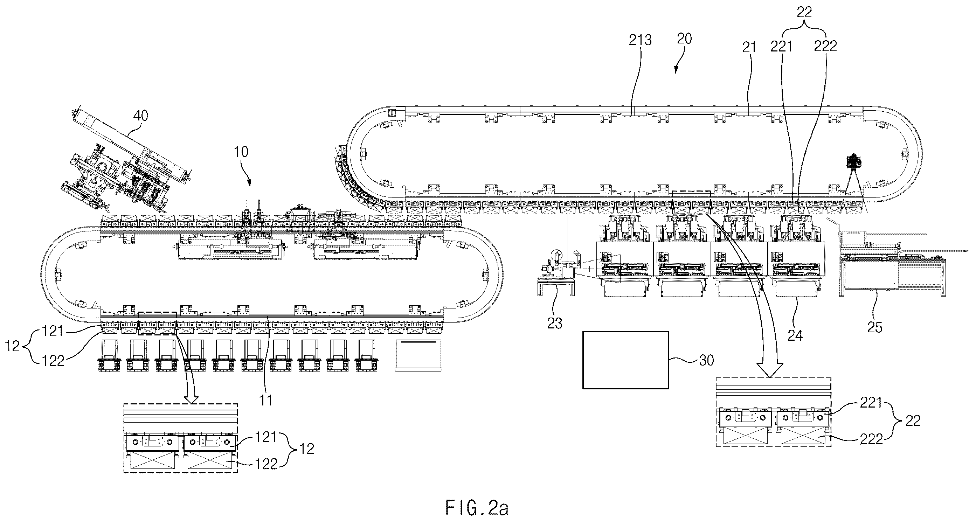

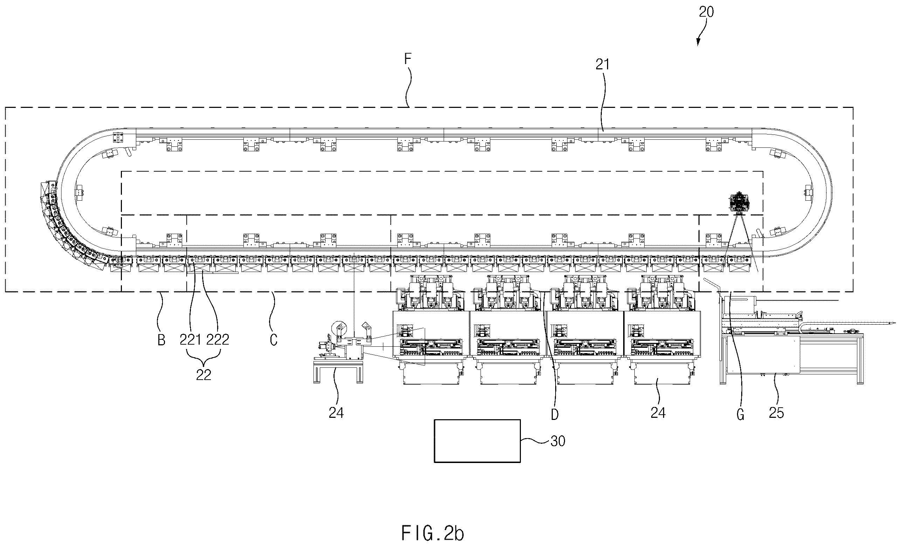

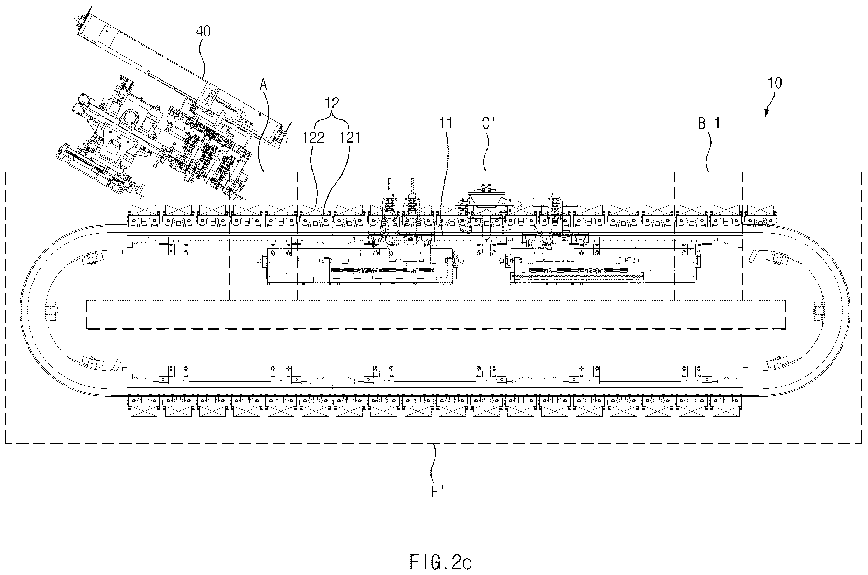

FIG. 1 is a schematic process view illustrating an object loading system of the present invention, FIG. 2a is a design view illustrating the object loading system of the present invention, FIG. 2b is a design view illustrating a loading device provided in the object loading system of the present invention, and FIG. 2c is a design view illustrating a transfer device provided in the object loading system of the present invention.

### [Object loading system of the present invention]

An object loading system of the present invention includes a loading device 20 and a controller 30, as illustrated in FIG. 1 and FIGS. 2a to 2c. In addition, the object loading system of the present invention may further include a transfer device 10.

### Loading Device

The loading device 20 has a structure to which a linear motor system (LMS) is applied. That is, the loading device 20 has a structure that absorbs a plurality of objects and then individually transfers the objects.

For example, the loading device 20 includes a first stator 21 and a first loading part 22.

The first stator 21 has a circulation traveling path that sequentially passes through a first section B, an acceleration section C, and a second section D. Particularly, the first stator 21 has a structure in which a plurality of first coils are arranged at regular intervals to provide the circulation traveling path that sequentially passes through the preset first section B, acceleration section C, and second section D. Here, each of the first coil is provided as an electromagnet.

That is, the plurality of first coils have a structure in which the first coils pass through the first section B, the acceleration section C, the second section D and then are disposed again in the first section B.

For example, the plurality of first coils are arranged in a circular running track like a track in a sports stadium.

The first section B is a section in which the object is disposed, the acceleration section C is a section through which the object passes, and the second section D is a section in which the object falls to be loaded. Particularly, one or more loading boxes in which the object is loaded is provided in the second section D.

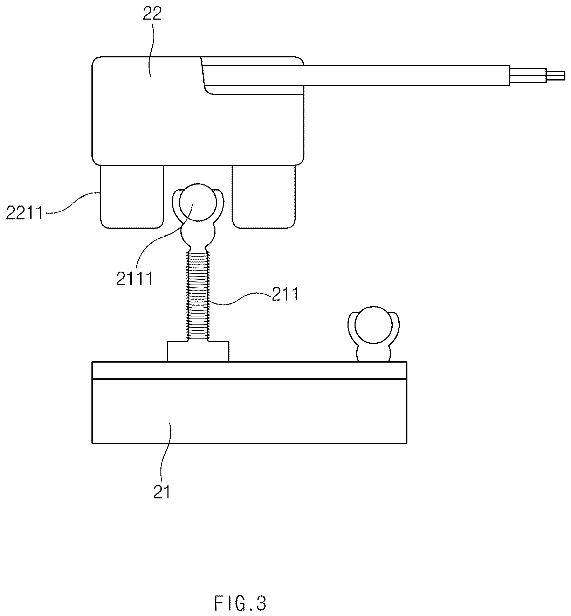

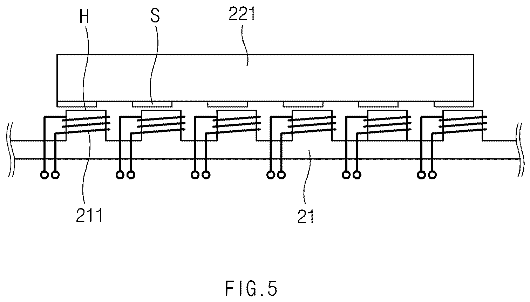

FIG. 3 is a view illustrating a first stator and a first mover of the object loading system of the present invention, and FIG. 5 is a schematic view illustrating an interaction between the first stator and the first mover of the object loading system of the present invention.

As illustrated in FIG. 3 and FIG. 5, the plurality of first coils 211 are provided in a direction of the circulation traveling path and are provided as an electromagnetic coil, which is an electromagnet. In addition, the first mover 221 corresponding to the first coil 211 includes a magnetic 2211 provided with an N pole and a S pole.

That is, the first mover 221 is circulated in one direction (a counterclockwise direction when viewed in FIG. 1) along the first coil 211 due to driving force generated by an interaction between the first coil 211 and the magnetic 2211 of the first coil 211. In other words, the first mover may be circulated along the first coil by supplying power to the first coil through which the first mover passes.

The first stator 21 is connected in the form of the circulation traveling path like a sports field track with a first section B, in which the object 1 is disposed, the acceleration section C, in which the object 1 travels, the second section D, in which the object is loaded, and a return section F connecting the second section D to the first section B.

The first stator 21 further includes a base part 213 that supports the plurality of first coils 211 to provide the circulation traveling path. That is, the base part 213 has the same shape as the track of the athletics stadium, and the plurality of first coils are supported on an outer circumferential surface to form the circulation traveling path.

The first loading part 22 is repeatedly circulated through the first section B, the acceleration section C, and the second section D and holds the object in the first section B to load the object in the second section D. Particularly, the first loading part 22 is provided in one or more parts, preferably in plurality. Particularly, the first loading part has a structure capable of absorbing and holding the object.

That is, the first loading part 22 is repeatedly circulated through the first section B, the acceleration section C, and the second section D by the interaction with magnetic fields generated in the first stator 21, and after absorbing the object 1 in the first section B, the object falls in the second section D and is loaded. Here, two or more loading points are set in the second section D, and the first loading part 22 is temporarily stopped at a loading point that is selected by the controller 30, and then, the adsorbed object 1 falls. The falling objects 1 are sequentially loaded into the loading box 24 disposed in the second section D.

For example, the first loading part 22 includes a first mover 221 that is movably installed on the first stator 21 and is repeatedly circulated through the first section B, the acceleration section C, and the second section D by the interaction with the magnetic fields generated in the first stator 21. In addition, the second mover 221 includes a magnetic provided with an N pole and an S pole.

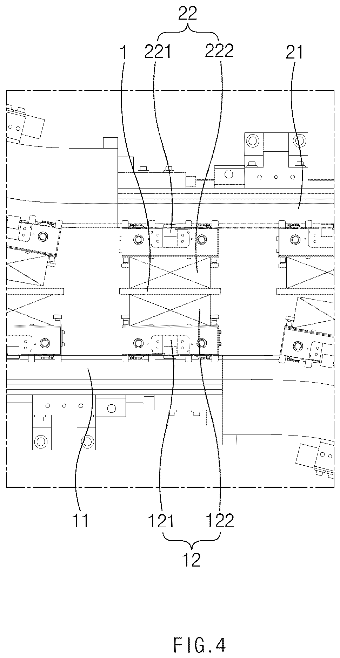

FIG. 4 is an enlarged view of the first and second loading parts illustrated in FIG. 2a.

As illustrated in FIG. 4, when current is applied to the first coil 211, electromagnetic force is applied to the first coil 211 by the interaction with the magnetic fields generated in the first stator 21, and the first mover 221 receives driving force by the electromagnetic force, and thus, the first mover 221 moves along the first coil 211 of the first stator 21. Here, if the current applied to the first coil 211 is large, the moving speed of the mover 22 increases, and if the current is small, the moving speed of the mover 221 decreases.

As described above, the moving speed of the first mover 221 may be controlled. That is, the controller 30 may control the moving speed of the first loading part 22 according to the section set in the first stator 21 by controlling the power supplied to the plurality of coils, i.e., magnitude of the current.

For example, if the controller 30 controls the current of the first coil 211 disposed in the acceleration section C to be greater than a preset value, the first loading part 22 passes through the acceleration section C at a high speed. In addition, when the current of the first coil 211 disposed in the first section B and the second section D is controlled to be less than the preset value, the first loading part 22 passes through the first section B and the second section D at a slow speed. Particularly, the controller 30 may control the current of the first coil 211 disposed in the second section D to be temporarily cut off, and thus, as the first loading part 22 is temporarily stopped in the second section D, the object 1 absorbed on the first loading part 22 may be dropped and loaded at an accurate position.

The first loading part 22 further include a first shuttle 222 that is fixed to the first mover 221 and adsorbs the object 1 disposed in the first section B to allow the object 1 to fall in the second section D.

That is, as illustrated in FIG. 5, the first shuttle 222 include an adsorption plate 2221 that adsorbs the object 1 disposed in the first section B using suction force, a suction machine 2222 that suctions air of the adsorption plate 231 to generate the suction force, and a fixing member 2223 that fixes the adsorption plate 231 to the first mover 221.

The first shuttle 222 may be coupled to be detachable from the first mover 221. For example, the first shuttle 222 and the first mover 221 may be detachably coupled to each other through a coupling structure of a groove and a protrusion. That is, the coupling groove is defined in the first shuttle, and the coupling protrusion that is detachably coupled to the coupling groove is defined in the first mover.

As another example, the first shuttle 222 and the first mover 221 may be detachably coupled using an electromagnet. Thus, the first shuttle 222 coupled to the first mover 221 may be easily replaced to improve compatibility and ease of maintenance.

The loading device 20 having the structure may allow the plurality of first loading parts 22 to sequentially pass through the first section B, the acceleration section C, and the second section D along the first stator 21.

### Controller

The controller 30 controls the first loading part to be repeatedly circulated through the first section, the acceleration section, and the second section. That is, the controller 30 may control the power (i.e., the current) supplied to each of the plurality of first coils so that the plurality of first loading parts 22 are repeatedly circulated through the first section B, the acceleration section C, and the second section D, thereby adjusting the moving speed of each of the plurality of first loading parts 22 passing through the first section B, the acceleration section C, and the second section D.

That is, the controller 30 may control each of the positions and speeds of the plurality of first loading parts 22, and thus, the speeds of the plurality of first loading parts 22 passing through the first section B, the acceleration section C, and the second section D may be individually adjusted to increase in supply speed of the object 1.

Here, the controller 30 may control the first loading part 22 to pass through the acceleration section C at a high speed. That is, the controller 30 may control the first loading part to pass through the acceleration section at a faster speed than the first section and the second section.

In more detail, the controller 30 controls the power supplied to the plurality of first coils 211 so that the first loading part 22 passes through the acceleration section C at a faster speed than the first section B and the second section D. That is, the controller 30 controls the first loading part 22 to move at a high speed when passing through the acceleration section C and controls the first loading part 22 to move at a slow speed when passing through the first and second sections D. Thus, the controller 30 may increase in current supplied to the acceleration section C to be greater than that in each of the first section B and the second section D, thereby increasing in moving speed of the first loading part 22 passing through the acceleration section C compared to that in the first and second sections, and thus, the supply speed of the object 1 may be improved.

Here, the controller 30 may control the power supplied to each of the plurality of first coils 211 so that the first loading part 22 passes through the acceleration section C at a speed of 1,501 mm/s to 3,500 mm/s, and preferably, the power supplied to the plurality of first coils 211 may be controlled so that the first loading part 22 passes through the acceleration section C at a speed of 1,800 mm/s to 2,500 mm/s. If the first loading part 22 moves in the acceleration section C at a speed of 1,500 mm/s or less, the supply speed may not be effectively improved, and if the first loading part 22 moves in the acceleration section C at a speed of 3,500 mm/s or more, there is a problem that the object 1 adsorbed on the first shuttle 222 is separated. Thus, the controller 30 controls the power supplied to each of the plurality of first coils 211 so that the first loading part 22 passes through the acceleration section C at a speed of 1,501 mm/s to 3,500 mm/s.

The controller 30 may control the power supplied to the plurality of first coils 211 so that the first loading part 22 passes through the first section B at a speed of 1,000 mm/s to 1,500 mm/s. Here, if the first loading part 22 passes through the first section B at a speed of 1,000 mm/s or less, there is a problem that the supply speed of the object 1 decreases, and if the first loading part 22 passes through the first section B at a speed of 1,500 mm/s or more, there is a problem that the object 1 disposed in the first section B may not be stably absorbed. Thus, the controller 30 controls the power supplied to each of the plurality of first coils 211 so that the first loading part 22 passes through the first section B at a speed of 1000mm/s to 1500 mm/s.

The controller 30 may temporarily cut off the power supplied to the first coil 211 disposed in the second section D so that the first loading part 22 is temporarily stopped when the object 1 falls by the first loading part 22 in the second section D. Thus, the object 1 may fall vertically into the second section D, and as a result, the object 1 may be loaded at an accurate position. Here, the controller 30 may temporarily stop the first loading part 22 disposed in the second section D for 1 second to 5 seconds, and preferably, for 2 seconds to 3 seconds.

In addition, when exceeding a pause time, the controller 30 supplies the power to the first coil 211 disposed in the second section D to allow the first loading part 22 to return to the first section B.

The first stator 21 further includes a return section F connecting the second section D to the first section B so that the first load section 22 passing through the second section D returns to the first section B, and the controller 30 controls the return section to pass at a faster speed than the first section and the second section. In other words, the controller may control the power supplied to each of the plurality of first coils 211 so that the first loading part 22 passes through the return section F at a speed equal to or faster than the acceleration section C. That is, the controller 30 may control the current supplied to the first coil 211 disposed in the return section F to increase so that the first loading part 22 having no object 1 returns to the first section B at a fast speed.

Here, the controller 30 controls the power supplied to the first coil 211 disposed in the second section D so that the first loading part 22 to which the object 1 is absorbed is disposed at a preset position in the second section D. That is, the controller 30 may control the power supplied to the first coil 211 disposed in the second section D to be reduced so that the first loading part 22 returning to the second section D is decelerated. Thus, the first loading part 22 may be stably disposed at the preset position in the second section D.

The controller 30 having such a configuration may control the moving speed of the first loading part 22 differently for the first section B, the acceleration section C, the second section D and the return section F of the first stator 21, and particularly, by significantly increasing in moving speed of the object 1 in the acceleration section C and the return section F, thereby significantly improving the supply speed of the object 1. For example, the controller 30 may control the first loading part 22 to move at a low speed in the first section B and the second section D and to move at a high speed in the acceleration section C and the return section F when the first stator 21 rotates once, thereby significantly improving the supply speed of the object 1.

The second section D includes a discharge point G. That is, when an inspection part 23 inspects the object 1 adsorbed on the first loading part 22 passing through the acceleration section C to determines whether the object 1 is defective, the controller 30 controls the first loading part 22 so that the first loading part 22, on which the defective object is adsorbed, is disposed at the discharge point G of the second section D, and the first loading part 22 allows the defective object to fall to the discharge point G so that the object is loaded in a discharge box 25.

Here, the inspection part 23 photographs a vision image of the object 1 to inspect folding at an edge, foreign substances on a surface, etc. The inspection part 23 may be a vision inspection machine.

The object loading system of the present invention may further include a transfer device 10 configured to dispose the object 1 in the first section B.

### Transfer Device

The above-described transfer device 10 is configured to dispose the object 1 in a first-1 section B-1 facing the first section B and has a structure in which a linear motor system (LMS) is applied, like the loading device. That is, the transfer device 10 has a structure that absorbs the plurality of objects 1 disposed in the supply section A and then disposes the objects in the first-1 section B-1.

Here, the object is supplied to the supply section A by the supply device 40.

For example, the transfer device 10 includes a second stator 11 and a second loading part 12.

The second stator 11 has a circulation traveling path that sequentially passes through the supply section A in which the object 1 is supplied and the first-1 section B-1 facing the first section B. Particularly, the second stator 11 has a structure in which a plurality of second coils 111 are disposed at regular intervals to provide a circulation traveling path that sequentially passes through the supply section A in which the object 1 is supplied and the first-1 section B-1 facing the first section B. Here, each of the second coil 111 is provided as an electromagnet.

For example, the plurality of second coils 111 are connected in the form of the circulation traveling path like a track and field stadium, and the second loading part 12 is circulated repeatedly through the supply section A and the first-1 section B-1 in the same manner as the first coil 211.

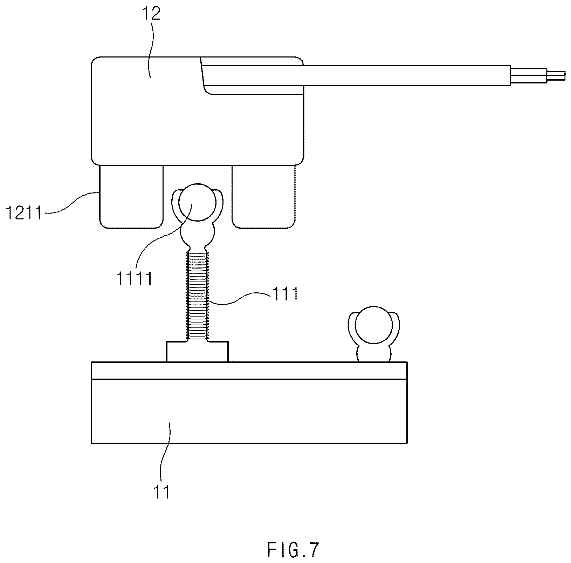

That is, the plurality of second coils 111 are provided in the direction of the circulation traveling path as illustrated in FIG. 7 and include an electromagnetic coil which is an electromagnet. In addition, the second mover 121 corresponding to the second coil 111 includes a magnetic 1211 provided with an N pole and an S pole.

Thus, the second mover 121 is circulated in one direction (a counterclockwise direction when viewed in FIG. 1) along the second coil 111 due to driving force generated by an interaction between the second coil 111 and the magnetic 1211 of the second coil 211.

As described above, in the second stator 11, the supply section A in which the object 1 is disposed and the first-1 section B-1 in which the object 1 is disposed are connected in the form of the circulation traveling path like the sports field track.

Here, the second stator 11 includes an acceleration section C' between the supply section A and the first-1 section B-1. That is, the second loading part 12 passes through the acceleration section C' at a faster speed than the supply section A and the first-1 section B-1.

The second stator 11 further includes a return section F' connecting the first-1 section B-1 to the supply section A. That is, the second stator 11 has a stadium track shape in which the supply section A, the acceleration section C', the first-1 section B-1, and the return section F' are sequentially connected.

Here, the second stator 11 is configured so that the second loading part 12 passes through the return section F' at a speed equal to or faster than the acceleration section C'.

The first loading part may absorb and hold the object 1 disposed in the first-1 section B-1 by the second loading part 12 in the first section B. That is, when the second loading part 12 is disposed in the first-1 section B-1, the first loading part 22 is disposed in the first section B based on the object 1 absorbed by the second loading part 12. Referring to FIG. 4, the first loading part and the second loading part are disposed to correspond to each other in the vertical direction based on the object 1. In this state, the suction force of the second loading part 12 is removed, and simultaneously, the suction force is generated in the first loading part 22. Thus, the first loading part 22 may absorb the object 1 of the second loading part 12, that is, the object 1 disposed in the first-1 section.

In this manner, the second loading part may continuously supply the object 1 to the first-1 section B-1, and the first loading part may continuously absorb and move the object 1, which is continuously supplied to the first-1 section B-1.

In more detail, the second loading part 12 is provided in plurality, is repeatedly circulated through the supply section A, the acceleration section C', the first-1 section B-1, and the return section F' by the interaction with the magnetic fields generated in the second stator 11, and absorbs the object 1 disposed in the supply section A so that the object 1 is disposed in the first-1 section B-1.

The second loading part 12 may be temporarily stopped in the first-1 section B-1 by the controller 30, and thus, the first loading part 22 may stably adsorb the object 1 of the second loading part 12 in the first section B.

For example, the second loading part 12 includes a second mover 121 that is movably installed on the second stator 11 and repeatedly circulated through the supply section A and the first-1 section B-1 by the interaction with the magnetic fields generated in the second stator 11. The above second mover 121 includes a magnetic 1211 provided with an N pole and an S pole.

As illustrated in FIG. 4, when current is applied to the second coil 111, electromagnetic force is applied to the second coil by the interaction with the magnetic fields generated in the second stator 11, and thus, the second mover 121 receives driving force by the electromagnetic force, and the second mover 121 moves along the second coil 111 of the second stator 11. Here, if the current applied to the second coil is large, the moving speed of the second mover 121 increases, and if the current is small, the moving speed of the second mover 121 decreases.

The second loading part 12 further include a second shuttle 122 that is fixed to the second mover 121 and adsorbs the object 1 disposed in the supply section A so that the object 1 is disposed in the first-1 section B-1.

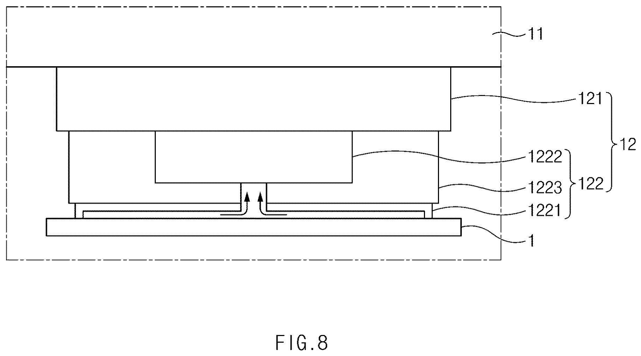

FIG. 8 is a cross-sectional view of the second shuttle.

That is, as illustrated in FIG. 8, the second shuttle 122 includes an adsorption plate 1221 that adsorbs the object 1 disposed in the supply section A through suction force, a suction machine 1222 that suctions air of the adsorption plate 1221 to generate the suction force, and a fixing member 1223 that fixes the adsorption plate 231 to the second mover 121.

That is, when power is supplied to the second shuttle, the object is adsorbed/desorbed using a solenoid valve.

The second shuttle 122 may be detachably coupled to the second mover 121. For example, the second shuttle 122 and the second mover 121 may be detachably coupled to each other through a coupling structure of a groove and a protrusion. As another example, the second shuttle 122 and the second mover 121 may be detachably coupled using an electromagnet. Thus, the second shuttle 122 coupled to the second mover 121 may be easily replaced to improve compatibility and ease of maintenance.

The second shuttle 122 has the same structure as the first shuttle 222 described above, and thus, duplicated description thereof will be omitted.

The controller 30 controls the power supplied to each of the plurality of second coils 111 so that the plurality of second loading parts 12 are repeatedly circulated through the supply section A and the first-1 section B-1. Particularly, the controller 30 controls a moving speed of each of the plurality of second loading parts 12 passing through the supply section A and the first-1 section B-1.

That is, the controller 30 controls the power supplied to each of the plurality of second coils 111 so that the second loading part 12 passes through the supply section A at a slower speed than the first-first section B-1. The controller 30 may control the second loading part 12 to pass through the supply section A at a slower speed than the first section B-1 by reducing the power of the second coil 111 disposed in the supply section A compared to the power supplied to the coil disposed in the first-1 section B-1.

For example, the controller controls the power supplied to the plurality of second coils so that the second loading part passes through the supply section at a speed of 500 mm/s to 900 mm/s.

Therefore, the object loading system of the present invention may further include the transfer device 10 to effectively move the object 1, and thus, the supply speed of the object 1 may be significantly improved.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Object
10: Transfer device
11: Second stator
111: Second coil
12: Second loading part
121: Second mover
1211: Magnetic
122: Second shuttle
1221: Adsorption plate
1222: Suction machine
1223: Fixing member
20: Loading device
21: First stator
211: First coil
213: Base part
22: First loading part
221: First mover
2211: Magnetic
222: First shuttle
2221: Adsorption plate
2222: Suction machine
2223: Fixing member
30: Controller
A: Supply section
B: First section
B-1: First-1 section
C: Acceleration section
D: Second section
F: Return section

## Claims

1. An object loading system comprising:
a first stator having a circulation traveling path that sequentially passes through a first section, an acceleration section, and a second section;
one or more first loading parts repeatedly circulated through the first section, the acceleration section, and the second section and configured to hold an object disposed in the first section to load the object in the second section; and
a controller configured to control the first loading part to be repeatedly circulated through the first section, the acceleration section, and the second section,
wherein the controller is configured to control the first loading part to pass through the acceleration section at a faster speed than each of the first section and the second section.

2. The object loading system of claim 1, wherein the first stator is provided with a plurality of first coils, each of which is provided as an electromagnet, and which are disposed in a circulation traveling path that sequentially passes the first section, the acceleration section, and the second section,
the first loading part is repeatedly circulated through the first section, the acceleration section, and the second section by the interaction with the magnetic fields generated in the first stator, and
the controller is configured to control power supplied to the plurality of first coils so that the first loading part passes through the acceleration section at a faster speed than each of the first section and the second section.

3. The object loading system of claim 2, wherein the controller is configured to increase in power supplied to the first coil disposed in the acceleration section more than power supplied to the first coil disposed in the first section and the second section so that the first loading part passes through the acceleration section at a faster speed than each of the first section and the second section.

4. The object loading system of claim 1, wherein the controller is configured to increase in power supplied to the first coil disposed in the first section more than power supplied to the first coil disposed in the second section so that the first loading part passes through the first section at a faster speed than the second section.

5. The object loading system of claim 1, wherein the controller is configured to control the power supplied to each of the plurality of first coils so that the first loading part passes through the acceleration section at a speed of 1,501 mm/s to 3,500 mm/s.

6. The object loading system of claim 5, wherein the controller is configured to control the power supplied to each of the plurality of first coils so that the first loading part passes through the acceleration section at a speed of 2,000 mm/s to 2,500 mm/s.

7. The object loading system of claim 1, wherein the controller is configured to control the power supplied to each of the plurality of first coils so that the first loading part passes through the first section at a speed of 1,000 mm/s to 1,500 mm/s.

8. The object loading system of claim 1, wherein the first stator further comprises a return section connecting the second section to the first section so that the first load part, which passes through the second section, returns to the first section, and
the controller is configured to control the first loading part to pass through the return section at a faster speed than each of the first section and the second section.

9. The object loading system of claim 1, wherein the controller is configured to control power supplied to the first coil disposed in the second section so that the first loading part is disposed at a preset position in the second section.

10. The object loading system of claim 1, wherein the first loading part comprises:
a first mover installed in the first stator and repeatedly circulated through the first section, the acceleration section, and the second section by the interaction with the magnetic fields generated in the first stator; and
a first shuttle fixed to the first mover and configured to adsorb the object disposed in the first section so that the object falls in the second section.

11. The object loading system of claim 10, wherein the first shuttle is detachably coupled to the first mover.

12. The object loading system of claim 1, further comprising:
a second stator having a circulation traveling path that sequentially passes through a supply section, in which the object is supplied, and a first-1 section facing the first section; and
one or more second loading parts repeatedly circulated through the supply section and the first-1 section and configured to hold the object disposed in the supply section so that the object is disposed in the first-1 section,
wherein the first loading parts is configured to hole the object, which is disposed in the first-1 section, in the first section.

13. The object loading system of claim 12, wherein the second stator is provided with a plurality of second coils, each of which is provided as an electromagnet, and which are disposed in a circulation traveling path that sequentially passes the supply section and the first-1 section,
the second loading part is repeatedly circulated through the supply section and the first-1 section by an interaction with magnetic fields generated in the second stator, and
the controller is configured to control power supplied to the plurality of second coils so that the second loading part is repeatedly circulated through the supply section and the first-1 section.

14. The object loading system of claim 13, wherein the controller is configured to control the power supplied to each of the plurality of second coils so that the second loading part passes through the supply section at a slower speed than the first-1 section.

15. The object loading system of claim 14, wherein the controller is configured to control the power supplied to each of the plurality of second coils so that the second loading part passes through the supply section at a speed of 500 mm/s to 900 mm/s.
